(19) Europäisches Patentamt

European Patent Office

Office européen des brevets

(11) **EP 1 676 489 A2**

(12) **EUROPEAN PATENT APPLICATION**

(43) Date of publication:
05.07.2006 Bulletin 2006/27

(51) Int Cl.:
*A23L 1/314* (2006.01)     *A23L 1/325* (2006.01)
*A23B 4/22* (2006.01)

(21) Application number: 05257720.2

(22) Date of filing: 15.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 16.12.2004 JP 2004364803
29.08.2005 JP 2005247130

(71) Applicant: Shonan Pure Co. Ltd.
Hiratsuka-shi,
Kanagawa 259-1212 (JP)

(72) Inventors:
• Sakagami, Izumi,
c/o Shonan Pure Co. Ltd.
Hiratsuka-shi,
Kanagawa, 259-1212 (JP)

• Kawahara, Yoshikazu,
c/o Kanagawa University
Yokosuka-shi,
Kanagawa, 258-8522 (JP)
• Suzuki, Youichi,
c/o Sagumi Women's Jun. College
Sagamihara-shi,
Kanagawa, 228-0807 (JP)

(74) Representative: Beacham, Annabel Rose
Frank B. Dehn & Co.
St Bride's House
10 Salisbury Square
London EC4Y 8JD (GB)

(54) **Method of producing food and food produced by the method**

(57)     To provide a method of producing meat, fish meat or a processed product thereof imparted therewith good color or flavour without using any chemically synthesized.additives such as coloring agents or color retaining aids for meat; and food produced by the method.

A microorganism is added to meat, fish meat, or a processed meat product thereof containing a protein-based red pigment, the microorganism being capable of acting on the protein-based red pigment to improve color. A microorganism obtained through a screening process including: inoculating a sample containing said microorganism to a section in slice of meat, fish meat, or a processed meat product thereof containing the protein-based red pigment and confirming a state of color development of the section is used as the microorganism. Furthermore, at least one kind selected from the group consisting of yeast, a fermented fruit product and an extract thereof is added together with the microorganism. Preferably, crushed yeast cells are used as the yeast and wine is used as the fermented fruit product or the extract thereof. As the microorganisms, lactobacilli belonging to the genus *Carnobacterium* or *Lactobacillus* can be used. Specifically, *Carnobacterium maltaromaticum* B64 (FERM BP-10449), or *Lactobacillus coryniformis synonym* R11 (FERM BP-10450) can be used.

EP 1 676 489 A2

**Description**

TECHNICAL FIELD

The present invention relates to a method of producing meat, fish meat or a processed product thereof having excellent color and flavour, etc. without using chemically synthesized additives such as coloring agents and color retaining aids for meat, and to food obtained by the method.

BACKGROUND ART

So-called lean meats including meats such as beef, -pork, mutton, goat meat, and horsemeat; whale meat; and fish meats such as tuna and katsuo fish (bonito fish), are rich in myoglobin that is a protein causing red pigment. Myoglobin includes an oxy-type form of myoglobin having a vivid red color, a reduced-type form of myoglobin having a purplish red color, and a met-type form of myoglobin having a brownish red color, each of which plays an important role in influencing the colors of meats and fish meats, as well as processed products thereof such as hams and sausages.

For example, fresh raw meat presents a vivid red color because myoglobin combines with oxygen to form an oxy-type form of myoglobin. On being exposed to the air, the myoglobin is further oxidized into a met-type form of myoglobin. As a result, color changes such as browning and discoloration proceed with time, thereby causing a reduction in the commercial value of the meat.

Further, to improve and stabilize the color of myoglobin that is easily impaired upon processing, additives, for example coloring agents such as nitrates or nitrites, and coloring aids such as ascorbic acid are also used in processed meat products such as hams and sausages.

However, using coloring agents such as nitrites and nitrates leads to a risk of forming nitrosamine, which is highly toxic and a carcinogen, by a reaction with an amino group, and hence it is desired to reduce the amount of the coloring agents to be used. Meanwhile, so-called additive-free hams that do not contain any coloring agents and the like have poor qualities of color, flavour, texture, and storage stability, which do not meet the current demands of the consumers.

Accordingly, there have been proposed various methods for imparting and retaining good qualities (color, flavour, texture, storage stability, and so on) with a minimized amount of or no chemically synthesized substances such as coloring agents.

For example, the inventors of the present invention have disclosed in JP-A-2004-65092 a method of producing a ham by a wet salting method that involves immersing a raw material meat in a salting solution, in which the salting solution contains at least a table salt and a lactic acid bacteria (lactobacillus), and contains none of nitric acid, nitrous acid or salts thereof, and the lactobacillus is *Lactobacillus sakei*, which can grow in a concentration of 2.5 mass% or higher of table salt and at a temperature of 5°C or lower.

JP-A-2004-242674 discloses an additive composition for a meat processed product, which contains sodium chloride, calcium chloride, and magnesium chloride, in which the weight ratio of magnesium chloride (as anhydrous salt) : calcium chloride (as anhydrous salt) is 0.15 : 1 to 0.80 : 1, and the weight ratio of sodium chloride . {magnesium chloride (as anhydrous salt) + calcium chloride (as anhydrous salt)} is 4:1 to 16:1.

JP-A-2003-93015 discloses a coloring agent for a processed meat product, which contains a calcium carbonate composition mainly consisting of calcium carbonate.

JP-A-2003-18976 discloses a method of preventing discoloration of meat/meat processed product, characterized by blending 0.01 to 20% by weight of raffinose.

JP-A-2000-139412 discloses a sausage not including a synthesized material, characterized in that no chemically synthesized substance is added and uncooked, puffed soybean powder and uncooked soybean fermented food or either one of those is added.

JP-A-2001-29006 discloses a method of producing a processed meat product, characterized in that a solution of an alkali agent is injected into raw material meat for a processed meat product, and the raw material meat is heat processed.

JP-A-08-308479 discloses a method of producing a ham containing trehalose, characterized by including: natural salting a raw material meat in a salting agent containing 0.01 to 20 parts by weight of trehalose per 100 parts by weight of the raw material meat; or rapid salting by injecting a pickle containing 1 to 100 parts by weight of trehalose per 100 parts by weight of the pickle into the raw material meat.

JP-A-2005-87058 discloses a method of coloring a meat product, characterized by allowing yeast belonging the genus *Saccharomyces* to contact with meat.

SUMMARY OF THE INVENTION

However, it has been difficult to obtain products having satisfactory qualities as compared with products in which chemically synthesized additives, for example coloring agents such as nitrates or nitrites and coloring aids such as ascorbic acid, are used even when the methods described in the above-mentioned patent documents are adopted.

Further, all of the above-mentioned methods are intended to improve the color of processed meat products such as hams and sausages and nothing is described in the above-mentioned patent documents as to whether the methods exhibit similar effect of improving the color of raw meats.

Accordingly, an object of the present invention is to provide a method of producing meat, fish meat, or a processed product thereof having excellent color, flavour, and the like without using chemically synthesized additives such as coloring agents and color retaining aids for meat, and to provide food obtained by the method.

In order to achieve the above-mentioned object, according to one aspect of the present invention, there is provided a method of producing food, characterized by including: adding a microorganism to meat, fish meat, or a processed meat product thereof containing a protein-based red pigment, the microorganism being capable of acting on the protein-based red pigment to improve color.

According to the method of producing food of the present invention, addition of a microorganism that is effective on the protein-based red pigment to improve color enables a good color and flavour to be imparted to meat, fish meat, or a processed product thereof containing the protein-based red pigment without using chemically synthesized additives such as coloring agents and color retaining aids for meat.

In the above-mentioned invention, it is preferable that the method further includes: wrapping the meat, the fish meat, or the processed meat product thereof containing the protein-based red pigment after adding the microorganism thereto. Wrapping brings about an increase in storage stability and an effect of improving color by the above-mentioned microorganism, so products having a good color can be obtained.

Further, it is preferable that the microorganism be a microorganism that is obtained through a screening process including: inoculating a sample containing said microorganism into a section of a slice of meat, fish meat, or a processed meat product thereof containing the protein-based red pigment and confirming a state of color development of the section. This facilitates screening of a microorganism that is effective on the protein-based red pigment to improve color. In addition, the degree of the effect of improving color of the protein-based red pigment exhibited by the screened microorganism can be readily confirmed, thereby being capable of imparting good color fitted to respective products.

According to another aspect of the invention, in the above-mentioned method of producing food, there is provided a method of producing food, characterized by further including: adding at least one kind selected from the group consisting of yeast, a fermented fruit product and an extract thereof.

According to the above-mentioned method of producing food of the present invention, addition of i) a microorganism that is effective on the protein-based red pigment to improve color and ii) at least one kind selected from the group consisting of yeast, a fermented fruit product and an extract thereof, enables meat, fish meat or processed products thereof containing protein-based red pigment to be imparted with a further improved color or flavour without using chemically synthesized substances such as coloring agents and color retaining aids for meat.

In the above-mentioned invention, it is preferable that the method further includes: wrapping the meat, the fish meat, or the processed meat product thereof containing the protein-based red pigment after adding thereto i) the microorganism and ii) at least one kind selected from the group consisting of yeast, a fermented fruit product or an extract thereof.

Further, it is preferable that the method further includes: treating by heat the meat, the fish meat, or the processed meat product thereof containing the protein-based red pigment after adding thereto i) the microorganism and ii) at least one kind selected from the group consisting of yeast, a fermented fruit product or an extract thereof.

Further, it is preferable that the method further includes: adding further microorganism after the heat treatment.

Preferably, crushed yeast cells are used as the yeast, and wine is used as the fermented fruit product or the extract thereof.

With the above-mentioned methods, storage stability and effect of improving color due to the above-mentioned components i) and ii) are provided, so products having a further improved color can be obtained.

In the present invention, the microorganism that is effective on the protein-based red pigment to improve color is preferably a lactic acid bacteria (hereinafter also referred to as lactobacillus or lactobacilli).

Further, it is preferable that the microorganism that is effective on the protein-based red pigment to improve color be a microorganism belonging to the genus *Carnobacterium* or the genus *Lactobacillus.* A specific example thereof to be preferably used includes *Carnobacterium maltaromaticum* B64 (International Patent Organism Depositary Accession No. FERM BP-10449), or *Lactobacillus coryniformis synonym* R11 (International Patent Organism Depositary Accession No. FERM BP-10450).

With the above-mentioned methods, not only can the products be imparted with a good color and flavour, but the storage stability of the products can also be improved.

A method of producing food according to the present invention is preferably applied to production of one kind selected from the group consisting of hams, sausages, bacons, roast beef, fish meat hams, fish meat sausages, whale bacon, and finely-chopped lean fish meat. With this, the products can be imparted with a preferable color and flavour without using coloring agents such as nitrites and nitrates.

Another object of the present invention is to provide a food produced by any one of the above-mentioned methods.

According to the present invention, it is possible to easily manufacture meat, fish meat or processed products thereof having imparted therewith good color or flavour without using any chemically synthesized additives such as coloring agents or color retaining aids for meat.

BEST MODE FOR CARRYING OUT THE INVENTION

The term "protein-based red pigment" as used herein means pigment caused by myoglobin and/or haemoglobin. The meat and fish meat used in the present invention are not particularly limited as long as they contain the above-mentioned protein-based red pigment and specific examples thereof include meats such as beef, pork, horse meat, mutton, goat meat, chicken, rabbit meat, boar meat, and dear meat, fish meats such as whale meat, tuna, katsuo fish (bonito fish), and yellow tail. Of those, preferred examples include beef, pork, horsemeat, mutton, goat meat, whale meat, tuna, and yellow tail.

Processed products produced from the above-mentioned meats and fish meats include, meat processed products, for example, hams (ham with bone, boneless ham, loin ham, shoulder ham, berry ham, racks ham, pressed ham, mixed pressed ham, chopped ham, etc.), sausages (sausage, cooked sausage, heated and compressed sausage, semi-dry sausage, dry sausage, non-salted sausage, Bologna sausage, Frankfurt sausage, Vienna sausage, Lyon sausage, liver sausage, mixed sausage, compressed and heated mixed sausage, fresh sausage, etc.), bacons (bacon, loin bacon, shoulder bacon, middle bacon, side bacon, non-salted bacon), and roast beef and fish meat processed products such as fish meat ham, fish meat sausage, whale bacon, and chopped lean fish meat such as katsuo fish (bonito fish) and tuna.

The microorganism that is effective on the protein-based red pigment to improve color used in the present invention is a microorganism that exhibits an effect to improve the color of the protein-based red pigment, the resultant color being desirably fitted to respective products. Such a microorganism can be obtained through a screening process including: inoculating a sample containing a microorganism into a section of a slice of meat, fish meat, or processed product thereof containing the protein-based red pigment and confirming the state of coloring of the section.

Specifically, the screening can be performed by inoculating a sample containing a microorganism (preferably isolated microorganism) into a section of a slice of meat, fish meat, or processed product thereof containing the protein-based red pigment by, for example, a coating method, a spraying method, or an injecting method, retaining it at 2 to 25°C for 4 to 200 hours, and then confirming the state of color development of the section. Confirmation of the state of color development can be performed visually, by colorimetric measurement in L*a*b*-value by a spectrocolorimeter, or by extracting coloring pigments as well as total Mb (myoglobin) according to the method of Sakata et al. (Agric. Biol. Chem. 45, p 2077 (1981)) and calculating the coloring ratio relating to a ratio in amount between coloring pigments and total Mb (myoglobin).

Conventionally, as for the method of measuring the bacteria's ability of developing color of meat, a method that involves adding a myoglobin preparation to an MRS medium or a GYP medium and assaying the bacteria's ability of developing red color thereof has been known. However, the ability of developing red color of the above-mentioned media is not equivalent to the ability of developing red color of meats, and it has been often the case that when applied to actual products, the method does not provide good coloring. In contrast, by adopting the above-mentioned screening method in the present invention, a microorganism that is effective on the protein-based red pigment to improve color, the resultant color being suitable for the respective product, can be selected efficiently.

Lactic acid bacteria are used as the microorganism in the present invention. Of those, a microorganism belonging to the genus *Carnobacterium* or the genus *Lactobacillus* is preferably used. Specifically, *Carnobacterium maltaromaticum* B64 (International Patent Organism Depositary Accession No. FERM BP-10449) or *Lactobacillus coryniformis* synonym R11 (International Patent Organism Depositary Accession NO. FERM BP-10450) is preferably used.

Note that *Carnobacterium maltaromaticum* B64 (International Patent Organism Depositary Accession No. FERM BP-10449) and *Lactobacillus coryniformis* synonym R11 (International Patent Organism Depositary Accession NO. FERM BP-10450) each are isolated from a liquid after termination of salting of a nitrite additive-free ham and they are deposited in the International Patent Organism Depositary, Japan National Institute of Advanced Industrial Science and Technology.

The various mycological properties of *Carnobacterium maltaromaticum* B64 (International Patent Organism Depositary Accession No. FERM BP-10449) are indicated in the following Table 1.

Table 1

| Morphology | rods | Galactose | + |
|---|---|---|---|
| Gram stain | + | Sucrose | + |
| Spore | - | Maltose | + |
| Motility | - | Cellobiose | + |
| Behaviour to oxygen | Facultative anaerobic | Lactose | + |
| Catalase | - | Trehalose | + |
| Lactic acid generation | L(+) | Mellibiose | -[*1] |
| Generation of gas from glucose | - | Raffinose | - |
| Generation of gas from gluconate | - | Melezitose | -[*1] |
| Growth at 15°C | + | Starch | Weak |
| Growth at 45°C | - | Mannitol | + |
| Fermentation of sugars | | Sorbitol | -[*1] |
| L-Arabinose | - | Esculin | + |
| D-Xylose | - | Salicin | + |
| Rhamnose | - | Amygdalin | + |
| Sorbose | - | Gluconate | + |
| Ribose | + | GC content (mol%) of intracellular DNA[*2] | 35 |
| Glucose | + | *1: Non-typical | |
| Mannose | + | properties | |
| Fructose | + | *2: By HPLC method | |

The various mycological properties of *Lactobacillus coryniformis* synonym R11 (International Patent Organism Depositary Accession No. FERM BP-10450) are indicated in the following Table 2.

Table 2

| Morphology | rods to polymorphic rods | Galactose | + |
|---|---|---|---|
| Gram stain | + | Sucrose | - |
| Spore | - | Maltose | + |
| Motility | - | Cellobiose | - |
| Behaviour to oxygen | Facultative anaerobic | Lactose | - |
| Catalase | - | Trehalose | - |
| Lactic acid generation | D(-) | Mellibiose | - |
| Generation of gas from glucose | - | Raffinose | - |
| Generation of gas from gluconate | - | Melezitose | - |
| Growth at 15°C | + | Starch | -[*1] |
| Growth at 45°C | - | Mannitol | + |
| Fermentation of sugars | | Sorbitol | - |
| L-Arabinose | - | Esculin | - |
| D-Xylose | - | Salicin | - |
| Rhamnose | - | Amygdalin | - |

Table continued

| Sorbose | - | Gluconate | + |
|---|---|---|---|
| Ribose | +[*1] | GC content (mol%) of intracellular DNA[*2] | 43 |
| Glucose | + | *1: Non-typical | |
| Mannose | + | properties | |
| Fructose | + | *2: By HPLC method | |

In culturing the above-mentioned lactobacilli, for example, APT medium (trade name: DIFCO 265510), GYP medium, MRS medium (trade name: OXOID CM359), BHI medium (trade name: BD BBL 4312424) and so on, having compositions as shown in Tables 3 to 6 below can be used. Further, the above-mentioned lactobacilli are facultative anaerobic microorganisms and preferable culturing methods therefor include stationary culture or carbon dioxide purged culture and preferable culture conditions are 25°C for 15 to 24 hours.

Table 3

| APT medium (per 1,000 ml of medium) | |
|---|---|
| Yeast extract | 7.5 g |
| Pancreatin digest of casein | 12.5 g |
| Dextrose | 10.0 g |
| Sodium citrate | 5.0 g |
| Thiamine hydrochloride | 0.001 g |
| Sodium chloride | 5.0 g |
| Potassium dihydrogen phosphate | 5.0 g |
| Manganese chloride | 0.14 g |
| Magnesium sulfate | 0.8 g |
| Ferrous sulfate | 0.04 g |
| Polysorbate 80 | 0.2 g |
| Sterilization at 121°C for 15 minutes, pH 6.7±0.2 | |

Table 4

| GYP medium (per 1,000 ml of medium) | |
|---|---|
| Glucose | 10.0 g |
| Bacto Yeast extract | 10.0 g |
| Bacto peptone | 10.0 g |
| Beef extract | 2.0 g |
| Sodium acetate trihydrate | 10.0 g |
| Tween 80 solution[*1] | 10.0 ml |
| Salts solution[*2] | 10.0 ml |
| Sodium chloride | 5.0 g |
| Sterilization at 121°C for 15 minutes, pH 6.9±0.1 | |
| *1: 50 mg/ml aqueous solution<br>*2: in 1 ml of aqueous solution<br>Magnesium sulfate heptahydrate: 40 mg | |

Table continued

| GYP medium (per 1,000 ml of medium) | |
|---|---|
| | Manganese sulfate tetrahydrate: 2 mg |
| | Ferrous sulfate heptahydrate: 2 mg |
| | Sodium chloride: 2 mg |

Table 5

| MRS medium (per 1,000 ml of medium) | |
|---|---|
| Peptone | 10.0 g |
| Beef extract | 8.0 g |
| Yeast extract | 4.0 g |
| Glucose | 20.0 g |
| Tween 80 | 1.0 ml |
| Dipotassium hydrogen phosphate | 2.0 g |
| Sodium acetate trihydrate | 5.0 g |
| Ammonium citrate | 2.0 g |
| Magnesium sulfate heptahydrate | 0.2 g |
| Manganese sulfate tetrahydrate | 0.05 g |
| Sterilization at 121°C for 15 minutes, pH 6.2±0.2 | |

Table 6

| BHI medium (per 1,000 ml of medium) | |
|---|---|
| Brain-heart muscle leach liquor (solid) | 6.0 g |
| Pepsin digest of animal tissue | 6.0 g |
| Sodium chloride | 5.0 g |
| Glucose | 3.0 g |
| Pancreatin digest of gelatin | 14.5 g |
| Disodium hydrogen phosphate | 2.5 g |
| Sterilization at 121°C for 15 minutes, pH 7.4±0.2 | |

Further, in the present invention, at least one kind selected from the group consisting of yeast, a fermented fruit product, and an extract thereof may be used in combination with the above-mentioned microorganism.

For the above-mentioned yeast, at least one kind selected from the group consisting of beer yeast, bread yeast, sake yeast, wine yeast, and shochu (Japanese distilled spirit yeast belonging to the genus *Saccharomyces cerevisiae*) can be used. Those yeasts may be commercially available ones. Further, any of living cells, dead cells, and crushed yeast cells can be used. Among them, crushed yeast cells may be used preferably. The crushed yeast cells can be prepared by a known method, for example, a method of mechanically destroying the cell wall of the cells or a method of treating the cells with an enzyme. A suspension of the crushed yeast cells in, for example, water or supernatant of the suspension is preferably used. Use of crushed yeast cells facilitates contact of components in the cells with the protein causing red pigment, so the color can be improved efficiently.

Examples of the above-mentioned fermented fruit product or the extract thereof include wine (red wine, white wine, rose wine), cider, fruit wine (made from peach, kiwi, apricot, persimmon, peer, or the like as raw material), and vermouth (wine to which, for example, a herb is added). In the present invention, wine free of food additives is preferably used.

Hereinafter, the method of producing food according to the present invention is described in more detail.

(1) Method of producing meat processed products

Meat processed products such as ham, sausage, bacon, and roast beef can be produced by adding a microorganism that is effective as above mentioned on the protein-based red pigment to improve color to raw material meat such as beef or pork directly or through a salting solution before heating the raw material meat, or after heat treatment. In a preferred embodiment, the meat processed products can be produced by adding i) a lactobacillus having an effect of improving color on the protein-based red pigment, and in addition ii) at least one kind selected from the group consisting of yeast, a fermented fruit product, and an extract thereof. Basically, the conventional production method may be followed.

Hereinafter, explanation is made taking production of ham as an example.

In a typical production method for hams, a so-called salting step in which a raw material meat is immersed in a salting solution containing table salt (wet salting method) or the salting solution is injected forcibly into the raw material meat using an injection needle (injection salting method) is followed by steps of drying, smoking, heat-sterilization, wrapping, and so on in any appropriate combination(s) to produce a ham as a final product.

First, in the above-mentioned salting step, it is preferable to use a salting solution that contains neither coloring agents nor coloring aids to be used in producing a so-called additive-free ham. Use of a salting solution that contains neither coloring agents nor coloring aids enables production of hams that are highly safe since no nitrosamine is formed.

As such a salting solution, for example, salting solutions containing table salt (a table salt concentration of preferably 4 to 15 mass%, more preferably 5 to 10 mass%) and lactobacillus (preferably *Lactobacillus sakei* that can grow at a table salt concentration of 2.5 mass% or higher and at a temperature of 5°C or less) as described in JP-A-2004-65091 and JP-A-2004-65092 can be used preferably. As described above, addition of a lactobacillus as a starter suppresses growth of microorganisms such as putrefactive bacteria and increases storage stability without impairing the qualities, such as flavour and texture, of ham produced through the wet salting step.

The above-mentioned salting solution may further contain seasonings such as sugars, soy sauce, and sweet sake, spices, and so on. For example, the amount of sugars to be added is preferably 0.5 to 10 mass%, more preferably 1 to 4 mass% with respect to the total mass of the salting solution. The pH of the salting solution is preferably within the range of 7 to 5.5.

The wet salting method can be performed under conditions of conventional wet salting method, which can be set appropriately. The immersion temperature is preferably 1 to 5°C, more preferably 1.5 to 3°C. The salting time is preferably 14 to 30 days.

A table salt concentration adjusting step in which the raw material meat after the above-mentioned salting is immersed in water to adjust the concentration of table salt in the raw material meat is performed to thereby remove excessive table salt and make the concentration of table salt uniform.

In the injection salting method, a conventional injection method can be used, and an injection method with an injector is preferably used. In this case, the amount of salting solution to be injected is preferably 5 to 15 mass% with respect to the mass of the raw material meat.

After the injection of the salting solution, tumbling (tumbling time: 30 to 360 minutes) is performed using a conventional tumbler or massager. Physical impacts to the raw material meat due to the tumbling dissolve a protein system that participates in the water retaining property and binding property of the raw material meat and extracts the dissolved protein system out of the cells. Then, an aging step including:

infiltration and aging by low temperature storage for a short period of time (storage temperature: 1 to 5°C, storage time: 1 to 14 days) is performed. After the aging step, a table salt concentration adjusting step may be performed in which the raw material meat after the injection salting is immersed in water to adjust the concentration of table salt in the raw material meat to thereby remove excessive table salt and make the concentration of table salt uniform.

A drying step may be performed to stabilize the microorganism flora and to decrease pH and moisture activity, thereby increasing the storage stability of the meat. The drying step is performed preferably under drying conditions of 45 to 75°C for 30 to 120 minutes. A conventional drier can be used as a drying apparatus.

A smoking step is a step that may be performed in order to improve the color, quality, and flavour of meat after the salting and to increase storage stability by decreasing the moisture activity in the same manner as described above. The smoking step is performed preferably under smoking conditions of 45 to 85°C for 20 to 120 minutes. A conventional full automatic smoker or the like can be used as a smoking apparatus.

In the above-mentioned process, the table salt concentration adjusting step, drying step, and smoking step may be performed optionally and need not always be performed.

Heat treatment is a step that is used in order to kill putrefactive bacteria and the like to increase the storage stability of the meat and to improve the color and flavour of the meat. The heating methods that can be used include various methods such as boiling and steaming. The heating conditions can be set appropriately for each type of product in accordance with the Food Sanitation Law, for example, heating at 63°C as a temperature of center of meat for 30 minutes or heating conditions that are equivalent to or higher than those.

In the present invention, i) a microorganism that is effective on the protein-based red pigment to improve color, or ii) at least one kind selected from the group consisting of yeast, a fermented fruit product, or an extract thereof may be added before the heat treatment or after the heat treatment. Alternatively, it can be added at the time of salting treatment through the salting solution.

After the heat treatment, a microorganism that is effective on the protein-based red pigment to improve color can be added. This makes it possible to obtain a more sufficient effect of improving color.

The amount of each component to be added can be selected appropriately depending on the kind or type of the products. For example, the component i) may be added in an amount of preferably $10^2$ to $10^8$ CFU/g of the product, more preferably $10^4$ to $10^7$ CFU/g of the product. The adding method is not particularly limited and examples thereof include coating, spraying, and injection, which may be selected appropriately depending on the product. When the microorganism is a lactobacillus, it can be cultured in a suitable medium such as an APT medium (at 20 to 30°C for 8 to 24 hours). Cells are washed with physiological saline, and then concentrated in a low temperature centrifuge to thereby prepare a cell suspension.

For the component ii), yeast may be crushed by a conventional method and the crushed yeast may be added in an amount of preferably 0.01 to 15 mass%, more preferably 0.1 to 10 mass% with respect to the basic raw material (meat, fat, table salt, water, etc.). The crushed yeast may be added directly to the raw material, or a suspension obtained by suspending it in water or supernatant of the suspension may be added.

The fermented fruit product or the extract thereof may be added in an amount of preferably 1 to 15 mass%, more preferably 3 to 10 mass% with respect to the basic raw material (meat, fat, table salt, water, etc.).

When the components are added after the heat treatment, the resultant mixture can be retained at 2 to 20°C for 12 hours to 14 days, more preferably 5 to 10°C for 12 hours to 7 days after a predetermined amount of each component is added.

In the present invention, when the component ii) is added together with the component i), it is preferable that the microorganism is added during the salting treatment step or before heat treatment. In this case, after addition of the components i) and ii), heat treatment is performed after retaining the resultant mixture at 2 to 40°C for 12 hours to 30 days, more preferably 7 to 20°C for 12 to 72 hours. This makes it possible to improve the color of the meat more effectively.

It is more preferable that, after the heat treatment, further microorganism that is effective on the protein-based red pigment to improve color is added. By adding the microorganism again after the heat treatment as described above, a more sufficient effect of improving color can be obtained.

In the present invention, it is preferable that the meat is wrapped after the addition of the microorganism. Although various known wrapping means can be selected, the wrapping step is preferably performed by vacuum wrapping using a film having a gas barrier property.

The ham obtained as described above can be stored under storage conditions that can be set appropriately depending on the kind of product in accordance with the Food Sanitation Law. In the present invention, it is preferable that storage is performed at 4 to 15°C. By storing the meat under such conditions, good coloring can be obtained. Also, good flavour can be obtained.

The hams produced by the above-mentioned production method, which are so-called additive-free hams, have good qualities, e.g., desirable color and flavour as well as excellent storage stability as compared with conventional additive-free hams.

In the case of sausages, the components i) and ii) are added to basic raw materials (meat, fat, table salt, water, etc.). The whole was mixed, and retained preferably at 2 to 40°C for 12 to 72 hours, more preferably 7 to 25°C for 12 to 48 hours, followed by casing the mixture and retaining it preferably at 30 to 60°C for 30 minutes to 24 hours, more preferably at 40 to 60°C for 30 minutes to 10 hours. Thereafter, smoking, heat treatment, and so on may be performed in the conventional manner.

(2) Raw meat and fish meat

The components i) and ii) can be added to raw meats such as beef, pork, horsemeat, whale meat, tuna, and yellow tail according to basically the conventional raw meat processing method.

In the case of animal meat, butcher's meat is prepared as follows. Cattle, pig, horse, or the like are slaughtered, decorticated, eviscerated, and halved to form dressed carcasses. The dressed carcass is de-boned for each division site. The meat portion that is divided and de-boned is cut and sliced to form blocks or slices.

Taking beef as an example, a halved dressed carcass is further divided into plate, flank, loin, and rump. Those are de-boned and further arranged into thirteen meat portions, i.e., neck, arm, chuck-roll, rib-loin, sirloin, arm, flank, fillet, top-round, round tip, rump, silver side, and shank. Those arranged meat portions are cut and sliced to provide meat blocks and meat slices.

Taking pork as an example, halved dressed carcasses are each divided into shoulder, loin plate, rump, and fillets. Those are de-boned and arranged into six meat portions, i.e., loin, flank, rump, fillet chuck, limb and arm.

In the case of fish meat, landed fish is processed into round, semi-dress, dress, fillet, chunk, square, cut meat, or ground meat, which is marketed in cooled or refrigerated state, and then cut and sliced.

In the present invention, it is preferable that the components i) and ii) be added in any of the processing steps.

Specifically, the component i) can be added by preparing a microorganism suspension in the same manner as described above and adding it such that the microorganism is preferably present in an amount of $10^2$ to $10^8$ CFU/g of raw meat, more preferably $10^4$ to $10^7$ CFU/g of raw meat. The adding method is not particularly limited and examples thereof include coating, spraying, injection, and mixing, which may be selected appropriately depending on the product.

For the component ii), it is preferably that yeast is crushed by a known method and the resulting material is added in an amount of 0.01 to 15 mass%, more preferably 0.1 to 10 mass% with respect to the mass of raw meat. The component ii) can be added directly to the raw meat or a suspension of the component ii) in water or the like or supernatant of the suspension can be prepared and added.

The fermented fruit product or the extract thereof can be added in an amount of preferably 1 to 15 mass%, more preferably 3 to 10 mass% with respect to the raw meat.

In the present invention, it is preferable that the meat is wrapped after the addition of the components i) and ii). Although various known wrapping means can be selected, the wrapping step is preferably performed by vacuum wrapping using a film having a gas barrier property.

The raw meat obtained as described above can be stored under storage conditions that can be set appropriately depending on the kind of product in accordance with the Food Sanitation Law. In the present invention, it is preferable that storage is performed at 2 to 10°C. By storing the meat under those conditions, conversion into met-type form of the protein causing pigment in the raw meat that will otherwise occur during storage can be prevented.

While it is desired by consumers that raw meats such as beef and tuna meat have vivid red color, they tend to undergo deterioration of color owing to conversion of the protein causing red pigment into met-type form and therefore lose their commercial value even when freshness is not decreased. However, raw meat processed by the above-mentioned processing method does not undergo abrupt color deterioration as compared with conventional raw meat, so a decrease in commercial value can be prevented. As a result, animal protein source that has heretofore been discarded in spite of the fact that it has not deteriorated in quality can be saved and the amount of food waste is reduced.

EXAMPLE

Hereinafter, the present invention is explained specifically by examples. However, the examples do not limit the scope of the present invention.

Example 1

Screening for a microorganism that is effective on the protein-based red pigment to improve color was performed by the following method.

Fifteen (15) samples of a salting solution after completion of salting of a nitrite-free ham therein were cultured using as a separation medium a modified MRS white agar medium constituted of a commercially available MRS medium to which 3 mass% sodium chloride and 0.2 mass% myoglobin were added.

A cell suspension diluted by a conventional method was pour-dilution plated and anaerobically cultured at 20°C for 7 days. Then, calcium carbonate was dissolved to form a clear zone. From each sample, 10 to 15 strains in which colonies made myoglobin in the medium red were separated taking into consideration, for example, the form and size of colony.

The separated microorganisms were examined for morphology, growth temperature, growth pH, presence or absence of the generation of gas, and salt tolerance to sort the strains. The sorted strains were inoculated in an assay medium (GYP medium to which 0.2 mass% myoglobin was added), and anaerobically cultured at 20°C for 24 hours, followed by observation of the state of developing red color of the medium with the naked eye.

Then, the culture of the strain, with which developing red color of the assay medium had been observed, was inoculated in a section of a nitrite-free ham with no color development, and the ham was observed to ascertain whether development of red color occurred. Thus, two typical strains (B64 strain and R11 strain) were selected.

The B64 strain was identified as *Carnobacterium maltaromaticum* from the results of the identification of the 16S-rDNA gene-based sequence analysis (a homology of 99% with *Carnobacterium maltaromaticum*), various mycological properties (see Table 1), and the like. *Carnobacterium maltaromaticum* had been known as a gram-positive *Lactobacillus (Lactobacillus maltaromicus)*, which produces mainly lactic acid by fermenting sugar, and was transferred to *Carnobacterium maltaromaticum* in the year 2003.

Note that a $LD_{50}$ test was run on *Carnobacterium maltaromaticum* B64 (International Patent Organism Depositary Accession NO. FERB BP-10449). No dead mice at any diluted stages ($1.5 \times 10^{12}$ cfu/ml to $1.5 \times 10^8$ cfu/ml) were

observed, and thus $LD_{50}$ value is 1.5 x $10^{12}$ cfu/ml or more.

The inventors of the present invention considered that the R11 strain is a *Lactobacillus coryniformis* synonym, a gram-positive *Lactobacillus,* which produces mainly lactic acid by fermenting sugar, from the results of the identification of the 16S-rDNA gene-based sequence analysis (a homology of 96% with *Lactobacillus coryniformis*), various mycological properties (see Table 2), and the like.

Note that a $LD_{50}$ test was run on *Lactobacillus coryniformis* synonym R11 (International Patent Organism Depositary Accession NO. FERB BP-10450). No dead mice at any diluted stages (8.0 x $10^{10}$ cfu/ml to 8.0 x $10^8$ cfu/ml) were observed, and thus $LD_{50}$ value is 8.0 x $10^{10}$ cfu/ml or more.

Example 2

The two lactobacillus strains (B64 strain, R11 strain) obtained in Example 1 were inoculated in meat processed products (additive-free roasted ham that contains no additives such as nitrites, and was produced by an injection salting method) after completion of heat sterilization. Then, the influences of the lactobacillus strains on the color, taste, and storage stability of the meat processed products were evaluated by colorimetric measurement of L*a*b*-value, measurements of the value of coloring ratio, and a sensory evaluation method (color, taste).

The food additive-free roasted ham was produced using a salting solution (100 mass parts of water, 17.3 mass parts of table salt, 6.5 mass parts of sugar, and 5 mass parts of spice) under the conditions shown in Tables 7 and 8.

Table 7

| | Injection salting conditions | |
|---|---|---|
| Amount of salting solution (based on mass of meat) | Injection | 10% |
| | Cover | 30% |
| Salting apparatus | Injector | Picomat |
| | Tumbler | 40 Minutes |
| Salting time | 72 Hours | |
| Salting temperature | 2°C | |

Table 8

| | Drying, smoking, heat sterilization conditions | | |
|---|---|---|---|
| Name of step | Inside Temperature | Central Temperature | Time |
| Drying | 60°C | - | 85 Minutes |
| Smoking | 60°C | - | 40 Minutes |
| Heat sterilization | 85°C | 75°C | 1 Minute |

Each of the lactobacilli was cultured in an APT medium at 25°C for 16 to 18 hours and then the cells were washed with physiological saline and concentrated with a low temperature centrifuge (trade name "Himac 7D2", manufactured by Hitachi Limited) to prepare a cell suspension.

The obtained food additive-free roasted ham was sliced (to about 60 g) and divided into a test section 1 (B64 strain-inoculated section, control section) and a test section 2 (R11 strain-inoculated section, control section), each of which was placed in a polyamide bag. The cell suspension was inoculated to be $10^8$ CFU/g and the bag was deaeration-wrapped using a vacuum-wrapping machine. The wrapped bag was stored for 14 days in a constant temperature incubator (trade name "IN800", manufactured by Yamato Chemical) set at 7°C.

(1) Colorimetric measurement of L*a*b*

On day 7 and day 14 after storage, colorimetric measurement of L*a*b* of each section was performed using a colorimeter (trade name "508i", manufactured by Minolta), and an average value was determined. The results are shown in Table 9.

Table 9

| | Test section 1 | | | Test section 2 | | |
|---|---|---|---|---|---|---|
| | Control section | B64 strain-inoculated section | | Control section | R11 strain-inoculated section | |
| | | Day 7 | Day 14 | | Day 7 | Day 14 |
| L* | 68.20 | 70.75 | 69.12 | 66.71 | 66.245 | 69.30 |
| a* | 2.99 | 4.63* | 5.80** | 3.27 | 5.57** | 5.28** |
| b* | 11.92 | 11.43 | 11.40 | 12.05 | 11.045 | 11.38** |
| *: Significantly different from a control section by t-test (p<0.05). **: Significantly different from a control section by t-test (p<0.01). | | | | | | |

Table 9 indicates that on day 7 and day 14, in each of test sections, the strain-inoculated section showed a significant increase in an a* value that represents red color of the ham as compared with the control section, so the color of the ham was improved.

(2) Measurement of coloring ratio

According to the method of Sakata et al. (Agric. Biol. Chem. 45 pl077 (1981)), red pigment (NOMb) was extracted from samples with 75% acetone, and an absorbance a at 395 nm was measured using a spectrophotometer. Further, total Mb (myoglobin) was extracted with 75% acetone/0.7% hydrochloric acid, and an absorbance b at 383 nm was measured. Then, the value of the coloring ratio was calculated in accordance with the following equation. The results obtained are shown in Table 10.

$$CFR=(a\times1.2/b)\times100$$

Table 10

| Test section 1 | | | Test section 2 | | |
|---|---|---|---|---|---|
| Control section | B64 strain-inoculated section | | Control section | R11 strain-inoculated section | |
| | Day 7 | Day 14 | | Day 7 | Day 14 |
| 4.2% | 9.0% | 9.1% | 7.3% | 13.6% | 17.3% |

Table 10 indicates that in any test section, the strain-inoculated section showed an increase in a CFR value as compared with the control section and that the CFR value was considerably increased particularly in the R11 strain-inoculated section.

(3) Sensory assessment

Twenty four (24) panellists performed evaluations of six properties, i.e., color, aroma, flavour, texture, taste, and total evaluation for each test section by pair test of a strain-inoculated section and a control section, according to a relative evaluation standards of 7 ranks ranging from scores -3 to +3, taking the state in which there was no difference between both the sections as score 0, and determining an average score. The results obtained are shown in Table 11.

Table 11

| Main effect of each test section in each evaluation item(Preference) | | | | |
|---|---|---|---|---|
| Evaluation Item | Test section 1 | | Test section 2 | |
| | B64 strain-inoculated section | Control section | R11 strain-inoculated section | Control section |
| Color | 1.04** | -1.04 | 1.15** | -1.15 |

Table continued

| Main effect of each test section in each evaluation item(Preference) | | | | |
|---|---|---|---|---|
| Evaluation Item | Test section 1 | | Test section 2 | |
| | B64 strain-inoculated section | Control section | R11 strain-inoculated section | Control section |
| Aroma | 0.00 | 0.00 | 0.54** | -0.54 |
| Flavour | 0.00 | 0.00 | 0.46** | -0.46 |
| Texture | 0.29** | -0.29 | 0.35** | -0.35 |
| Taste | 0.02 | -0.02 | 0.40** | -0.40 |
| Total evaluation | 0.25 | -0.25 | 0.60** | -0.60 |
| **: There was significant different at P<0.01. | | | | |

Table 11 indicates that for the color in both the test sections, the strain-inoculated section was significantly preferred as compared with the control section. In particular, in test section 2, the strain-inoculated section was significantly preferred more than the control section for all the other evaluation items. On the other hand, also in test section 1, the strain-inoculated section is significantly preferred for the texture while no difference was observed between both the sections on total evaluation, aroma, taste, and flavour.

In an acute toxicity test on a ham produced using B64 strain, no abnormality was observed on the general condition, weight change, and each organ after completion of the test on mice. In allergy tests, an IgE antibody was below detectable limit.

Example 3

After the lactobacilli (B64 strain, R11 strain) obtained in Example 1 were directly inoculated into the following commercially available meat processed products (heated after wrapping, free of chemically synthesized additives such as nitrites, each produced by Pure Pork Corp.), the products were vacuum-wrapped and stored at 7°C. On day 7, day 14 and day 21, microorganisms in the samples were tested by a conventional method. Note that each lactobacillus was inoculated in the same manner as in Example 2.

Sample 1: trade name "Family Coarsely Hashed Sausage"
Sample 2: trade name "Pure Loin Ham Slice" (wet salted type)
Sample 3: trade name "Family square Boneless Ham Slice" (injection salted type)

For each sample, the test section 1 (B64 strain-inoculated), the test section 2 (R11-inoculated), and the control section (no-strain-inoculated) were provided, and the kinds and the number of microorganisms that grew in samples of each section were compared with each other and studied.

The number of general viable cells, number of Gram negative rods, number of Staphylococcus and Gram positive cocci, number of fungi and yeast were each measured by a conventional method by culturing the microorganisms by a plate surface method at 25°C for 5 days using a standard agar medium (Nissui), a CVT agar medium (Nissui), a salt egg agar medium (Nissui), and a potato dextrose agar medium (Nissui), respectively.

The number of acid-producing cells was measured by anaerobically culturing the microorganisms by the plate surface method using an APT overlaid white agar medium (Difco) on which $CaCO_3$ was overlaid at 25°C for 5 days in Anaeropack (trade name, Mitsubishi Gas Chemical), and colonies with clear zones were counted as acid-producing cells.

*Escherichia coli* and coliform bacteria were measured in their bacteriological feature by a conventional method by culturing them using a Fluorocult LMX-broth (MERCK) liquid medium at 35°C for 24 hours.

*Salmonella bacteria* were measured by a conventional method by preculturing them in a EEm buillon at 35°C for 24 hours, growth culturing in a Rapaport medium at 42°C for 24 hour, and coat-cultured on a Madeck agar medium at 35°C for 24 hours. The results obtained are shown in Tables 12 to 14. The values in the tables represent "log of the number of cells/g", and "3.00" means "below 3".

Table 12

| | | Number of days of storage (days) | | | |
|---|---|---|---|---|---|
| | | 0 | 7 | 14 | 21 |
| Sample 1 | Control section | 3.00 | 3.00 | 3.00 | 3.00 |
| | Test section 1 | 8.36 | 7.88 | 7.64 | 7.83 |
| | Test section 2 | 8.53 | 8.07 | 7.23 | 7.64 |
| Sample 2 | Control section | 3.00 | 3.00 | 3.00 | 3.00 |
| | Test section 1 | 8.15 | 8.25 | 8.35 | 8.64 |
| | Test section 2 | 8.47 | 8.51 | 8.56 | 8.63 |
| Sample 3 | Control section | 3.00 | 3.00 | 3.00 | 3.00 |
| | Test section 1 | 8.14 | 8.39 | 8.40 | 8.75 |
| | Test section 2 | 8.33 | 8.54 | 8.35 | 8.67 |

Table 12 shows the results of measurement of changes in the number of acid-producing cells during storage. In the control sections, no acid-producing cells were observed in the samples throughout the storage period, while, in the test sections, acid-producing cells that would seem inoculated lactobacilli were observed, and maintained almost at a constant level throughout the storage period.

Table 13

| | | Day 21 of storage | | |
|---|---|---|---|---|
| | | Gram negative rods | Fungi/yeast | Gram positive cocci |
| Sample 1 | Control section | 6.76 | 6.66 | 4.62 |
| | Test section 1 | 3.00 | 3.61 | 3.00 |
| | Test section 2 | 3.00 | 3.48 | 3.00 |
| Sample 2 | Control section | 3.00 | 3.76 | 5.35 |
| | Test section 1 | 3.00 | 3.00 | 3.00 |
| | Test section 2 | 3.00 | 3.00 | 3.00 |
| Sample 3 | Control section | 3.00 | 3.87 | 6.32 |
| | Test section 1 | 3.00 | 3.00 | 3.00 |
| | Test section 2 | 3.00 | 3.00 | 3.00 |

Table 13 shows the results of measurements of the number of Gram negative rods, the number of fungi/yeast, and the number of Gram positive cocci in samples on day 21 of storage. It revealed that for any of the samples, the number of Gram negative rods, the number of fungi/yeast, and the number of Gram positive cocci in each test section were suppressed. On the other hand, in the control section for Sample 1, the number of Gram negative rods and fungi/ yeast positive cocci increased greatly while in the control section for Sample 3, the number of Gram positive cocci also increased greatly. Note that *Escherichia coli, Staphylococcus, Salmonella bacteria* were not detected in any of the samples.

These results suggest that inoculation of lactobacilli (B64 strain, R11 strain) into meat processed products provides a bio-preservation effect to meat processed products by forming a dominant bacteria flora.

Example 4

The lactobacilli (B64 strain, R11 strain) obtained in Example 1 were inoculated into raw beef and raw tuna meat and colorimetric measurement of L*a*b* was performed to compare and examine the effect of improving color on each meat.
(1) Beef used as a sample was beef fillet having color in which the conversion into met-type had occurred (stored at 4°C for 30 days) in order to clearly judge the effect of improving color of the lactobacilli. Note that measurement of the beef fillet at the time of starting the tests (6 points on the beef fillet) using a colorimeter provided average values of L* value: 45.11, a* value: 4.84, and b* value: 10.70.

Each of the lactobacilli was cultured in APT medium at 25°C for 16 to 18 hours, and then the cells were washed with physiological saline and concentrated by a low temperature centrifuge (trade name "Himac 7D2", manufactured by Hitachi Limited) to prepare a cell suspension.

The cell suspension was inoculated into about 60 g of beef fillet contained in a polyamide bag to be $10^8$ CFU/g, and the bag was deaeration-packed by a vacuum packer, followed by storage in a constant temperature incubator (trade name "IN800", manufactured by Yamato Science) set at 7°C for 5 days.

On day 5 after storage, colorimetric measurement of L*a*b* of each sample (B64 strain-inoculated section and R11 strain-inoculated section) was performed using a colorimeter (trade name "508i", manufactured by Minolta). The results are shown in Table 14.

Table 14

| | At time of starting test | A Storage for 5 days after inoculation | |
| --- | --- | --- | --- |
| | | B64 strain-inoculated section | R11 strain-inoculated section |
| L * | 45.11[C] | 42.38[d,e] | 47.97[f] |
| a * | 4.84[C] | 7.70[d] | 6.87[d] |
| b * | 10.70 | 9.82 | 10.33 |
| Significant difference of 1% was observed among c, d, e, and f. | | | |

Table 14 shows that both the B64 strain-inoculated section and the R11 strain-inoculated section showed a significant 1% increase in a* value representing red color as compared with the sample at the time of inoculating, indicating improvement of the color of beef in which the conversion into met-type had already occurred.

(2) Red muscle portion of tuna meat, which is myoglobin-rich, immediately after thawing from being frozen, was used as a sample of tuna meat in order to confirm whether it is possible to prevent deterioration of color.

Each of the lactobacilli was cultured in APT medium at 25°C for 16 to 18 hours and the cells were washed with physiological saline and concentrated in a low temperature centrifuge (trade name "Himac 7D2" manufactured by Hitachi Limited) to prepare a bacteria cell suspension.

The bacteria cell suspension was inoculated into about 60 g of red muscle portion of tuna meat that was placed in a polyamide bag beforehand to be $10^8$ CFU/g, and the bag was deaeration-packed by a vacuum packer and stored in a constant temperature incubator (trade name "IN800", manufactured by Yamato Science) set at 7°C for 5 days.

On day 5 of storage, colorimetric measurement of L*a*b* of each sample (B64 strain-inoculated section, R11 strain-inoculated section, control section) was performed using a colorimeter (trade name "508i", manufactured by Minolta). The results are shown in Table 15.

Table 15

| | At time of starting tests | Storage for 5 days after inoculation | | |
| --- | --- | --- | --- | --- |
| | | B64 strain-inoculated section | R11 strain-inoculated section | Control section |
| L* | 27.87[C] | 30.15[e] | 29.52[b, d] | 28.79 [a,d] |
| a* | 4.43 | 5.58[d] | 4.52[b] | 3.28[a, c] |
| b * | 0.96 | 1.24[d] | 1.06[b] | 0.62[a,c] |
| Significant difference of 5% was observed between a and b. Significant difference of 1% was observed among c, d, and e. | | | | |

Table 15 shows that the control section on day 5 of storage showed a decreased value of a* as compared with that at the time of starting the tests, indicating that the conversion into met-type proceeded. On the other hand, the B64 strain-inoculated section and the R11 strain-inoculated section showed a significant increase in a* value as compared with the control section, indicating that the conversion into met-type in tuna meat was prevented. Further, both the inoculated sections showed an increase in a* value as compared with that at the time of starting the tests, indicating that the color was improved.

Further, both the L* value and the b* value of the B64 strain-inoculated section and the R11 strain-inoculated section on day 5 of storage increased significantly as compared with the control section, indicating that the color was improved to become orange-series color that was brighter than the color of the control section.

Example 5

(1) Mince meat consisting of 98 mass% of pork arm and 2 mass% of table salt was used as a basic formula. Samples were prepared as follows. In 1) wine-added section, 10 mass% of white wine (manufactured by Izutsu Wine) was added to the basic formula; in 2) crushed yeast-added section, 10 mass% of crushed yeast, prepared by crushing dry yeast (trade name "Oriental Yeast (Regular)", manufactured by Oriental Yeast Industry Co., Ltd.) using a multi-sample cell crusher (trade name "Multi-bead Shocker MB-200W", manufactured by Yasui Machine Co., Ltd.) and 0.5 mass% of polyphosphate (mass ratio of sodium dihydrogen pyrophosphate: sodium polyphosphate=4:6) were added to the basic formula; in 3) the control section, 10 mass% of physiological saline was added to the basic formula, and mixed well. The mixtures were vacuum packed using a film having a gas barrier property and retained at 50°C for 180 minutes and further put in hot water at 75°C for 30 minutes.

The obtained samples were stored at room temperature (25°C) and after 0 hour and 24 hours, respectively, of storage, colorimetric measurement of L*a*b* of each section was performed using a colorimeter (trade name "508i", manufactured by Minolta) and change of a* value was examined. The results obtained are shown in Table 16.

Table 16

| Test section | Storage time | |
|---|---|---|
| | 0 Hour | 24 Hour |
| Wine-added section | 5.13 | 3.9 |
| Crushed yeast-added section | 5.57 | 4.67 |
| Control section | 4.76 | 2.97 |

Table 16 shows that the wine-added section and the crushed yeast-added section showed a* values higher than that of the control section, indicating that the color of the meat was improved.

(2) Based on the results of (1) above, non-salted sausages were prepared using two lactobacilli strains (B64 strain, R11 strain) obtained in Example 1 as well as wine and crushed yeast, and colorimetric measurement of L*a*b* was performed to compare and study influences of wine and crushed yeast on the color of meat. Note that each of the lactobacilli was cultured in APT medium at 25°C for 16 to 18 hours and the cells were washed with physiological saline and concentrated in a low temperature centrifuge (trade name "Himac 7D2" manufactured by Hitachi Limited) to prepare a bacteria cell suspension.

Pork arm and back fat were minced using a chopper in the formula shown in Table 17 as a basic raw material and a coloring solution were mixed and cut thinly using a silent cutter (manufactured by Duker Corp.). Then, the resultant was retained at 18°C for 24 hours and cased. The case was retained at 50°C for 3 hours, smoked (50°C) for 35 minutes, and heat-sterilized (80°C) for 15 minutes to produce non-salted sausage.

Table 17

| Composition of sausage (mass%) | | |
|---|---|---|
| Basic raw material | Pork arm | 70 |
| | Back fat | 15 |
| | Water | 3 |
| | Table salt | 2 |
| Coloring solution | | 10 |
| Total | | 100 |

The coloring solution for each section was prepared as follows.

- Lactobacillus-added section: a suspension of lactobacillus (B64 strain or R11 strain) in physiological saline was prepared such that the suspension was in an amount of 10 mass% with respect to the composition of the sausage and the number of lactobacillus was $10^8$ cells/g of sausage and added.
- Lactobacillus+wine-added section: lactobacillus (B64 strain or R11 strain) was added to sausage to be $10^8$ cells/g of sausage, and further wine was added in an amount of 10 mass% with respect to the composition of the sausage.
- Lactobacillus+crushed yeast-added section:

    lactobacillus (B64 strain or R11 strain) was added to sausage to be $10^8$ cells/g of sausage, and further supernatant of a crushed yeast suspension in purified water was added in an amount of 10 mass% with respect to the composition of the sausage.

- Comparative section: supernatant of a crushed yeast suspension in purified water was added in an amount of 10 mass% with respect to the composition of the sausage and 0.5 mass% of polyphosphate having the same composition as that in (1) above was added.
- Control section: physiological saline was added in an amount of 10 mass% with respect to the composition of the sausage.

The obtained samples were stored at room temperature (25°C) and after 0 hour, 24 hours, and 48 hours, respectively, of storage, colorimetric measurement of L\*a\*b\* of each section was performed using a colorimeter (trade name "508i", manufactured by Minolta) and change of a\* value was examined. The results obtained are shown in Table 18.

Table 18

| Test section | Coloring solution | | Storage time | | |
|---|---|---|---|---|---|
| | Lactobacillus | | 0 Hour | 24 Hours | 48 Hours |
| Lactobacillus added section | R11 strain | Physiological saline | 4.12 | 2.58 | 2.43 |
| Lactobacillus + wine-added section | | Wine | 4.70 | 4.84 | 4.01 |
| Lactobacillus + crushed yeast-added section | | Crushed yeast | 6.96 | 4.36 | 3.72 |
| Lactobacillus added section | B64 strain | Physiological saline | 4.13 | 2.73 | 2.84 |
| Lactobacillus + wine-added section | | Wine | 4.27 | 3.93 | 3.12 |
| Lactobacillus + crushed yeast-added section | | Crushed yeast | 7.23 | 4.84 | 4.21 |
| Comparative section | Crushed yeast + polyphosphate | | 5.72 | 4.16 | 3.55 |
| Control section | Physiological saline | | 3.91 | 1.89 | 1.58 |

Table 18 showed that the lactobacillus+wine-added section and the lactobacillus+crushed yeast-added section showed higher a\* values than those of the control section and the Lactobacillus-added section, indicating that the color of meat was further improved. In particular, since the lactobacillus+crushed yeast-added section had a\* values higher than those of the comparative section, it is apparent that use of the lactobacillus and the crushed yeast in combination enabled production of non-salted sausage having good color without use of any phosphate at all.
Further, it is shown that when the crushed yeast was used, the step of crushing yeast was necessary but use of the lactobacillus and wine in combination enabled improvement of the color of meat more simply and easily.

Example 6

Minced raw pork arm was mixed with the coloring solution constituted of lactobacillus, white wine, crushed yeast and so on and the resultant mixture was retained at 7°C for 48 hours and changes in a\* value were measured.
The coloring solution for each section was prepared as follows.

- Lactobacillus-added section: a suspension of lactobacillus (B64 strain or R11 strain) in physiological saline was prepared such that the suspension was in an amount of 10 mass% with respect to the composition of the minced raw pork and the number of lactobacillus was $10^8$ cells/g of minced raw pork and added.
- Lactobacillus+wine-added section: lactobacillus (B64 strain or R11 strain) was added to the minced raw pork to $10^8$

cells/g of the minced raw pork, and further wine was added in an amount of 10 mass% with respect to the composition of the minced raw pork.

- Lactobacillus+crushed yeast-added section:

    lactobacillus (B64 strain or R11 strain) was added to the minced raw pork to be $10^8$ cells/g of the minced raw pork, and further supernatant of a crushed yeast suspension in purified water was added in an amount of 10 mass% with respect to the composition of the minced raw pork.

- Comparative section: supernatant of a crushed yeast suspension in water was added in an amount of 10 mass% with respect the composition of the minced raw pork and 0.5 mass% of polyphosphate having the same composition as in (1) above was added.
- Control section: physiological saline was added in an amount of 10 mass% with respect to the composition of the minced raw pork.

The obtained samples were stored at room temperature (25°C) and after 0 hour, 24 hours, and 48 hours, respectively, of storage, colorimetric measurement of L*a*b* of each section was performed using a colorimeter (trade name "508i", manufactured by Minolta) and change of a* value was examined. The results obtained are shown in Table 19.

Table 19

| Test section | Coloring solution | | Storage time | |
|---|---|---|---|---|
| | Lactobacillus | | 0 Hour | 48 Hours |
| Lactobacillus added section | R11 strain | Physiological saline | 5.02 | 6.02 |
| Lactobacillus + wine-added section | | Wine | 4.52 | 5.86 |
| Lactobacillus + crushed Yeast-added section | | Crushed yeast | 4.98 | 6.33 |
| Lactobacillus added section | B64 strain | Physiological saline | 4.47 | 5.15 |
| Lactobacillus + wine-added section | | Wine | 4.93 | 6.04 |
| Lactobacillus + crushed Yeast-added section | | Crushed yeast | 4.83 | 5.89 |
| Comparative section | Crushed yeast + polyphosphate | | 4.55 | 4.05 |
| Control section | Physiological saline | | 4.26 | 3.58 |

Table 19 showed that the lactobacillus+crushed yeast-added section showed higher a* values than those of the comparative section, the control section, and the lactobacillus-added section for both B64 strain and R11 strain after 48 hours, indicating that use of the lactobacillus and the crushed yeast in combination improved the color of the meat. Further, it is shown that it was possible to realize substantially the same coloring effect also in the lactobacillus+wine-added section.

INDUSTRIAL APPLICABILITY

The method of producing food according to the present invention is applicable to the improvement of color of meat or fish meat containing protein-based red pigment, or processed products thereof, and in particular it is suitable for the improvement of the color of processed products such as additive-free hams.

**Claims**

1.  A method of producing food, comprising: adding a microorganism to meat, fish meat, or a processed meat product thereof containing a protein-based red pigment, the microorganism being capable of acting on the protein-based red pigment to improve color.

2.  A method of producing food according to claim 1, further comprising: wrapping the meat, the fish meat, or the processed meat product thereof containing the protein-based red pigment after adding the microorganism thereto.

3.  A method of producing food according to claim 1 or 2, wherein the microorganism is a microorganism that is obtained through a screening process including: inoculating a sample containing said microorganism into a section of a slice of meat, fish meat, or a processed meat product thereof containing the protein-based red pigment, and confirming a state of color development of the section.

**4.** A method of producing food according to any one of claims 1 to 3, further comprising: adding at least one of yeast, a fermented fruit product, and an extract thereof.

**5.** A method of producing food according to claim 4, further comprising: wrapping the meat, the fish meat, or the processed meat product thereof containing the protein-based red pigment after adding thereto i) the microorganism and ii) at least one kind selected from the group consisting of yeast, fermented fruit product or an extract thereof.

**6.** A method of producing food according to claim 4 or 5, further comprising: heat treating the meat, the fish meat, or the processed meat product thereof containing the protein-based red pigment after adding thereto i) the microorganism and ii) at least of yeast, a fermented fruit product or an extract thereof.

**7.** A method of producing food according to claim 6, further comprising: adding further microorganism after the heat treatment.

**8.** A method of producing food according to any one of claims 4 to 7, wherein crushed yeast cells are used as the yeast.

**9.** A method of producing food according to any one of claims 4 to 8, wherein wine is used as the fermented fruit product or the extract thereof.

**10.** A method of producing food according to any one of claims 1 to 9, wherein the microorganism that is capable of acting on the protein-based red pigment to improve color is a lactic acid bacteria.

**11.** A method of producing food according to any one of claims 1 to 10, wherein the microorganism that is capable of acting on the protein-based red pigment to improve color is a microorganism belonging to the genus *Carnobacterium* or *Lactobacillus.*

**12.** A method of producing food according to claim 11, wherein *Carnobacterium maltaromaticum* B64 (International Patent Organism Depositary Accession No. FERM BP-10449), or *Lactobacillus coryniformis synonym* R11 (International Patent Organism Depositary Accession No. FERM BP-10450) is used as the microorganism.

**13.** A method of producing food according to any one of claims 1 to 12, wherein the food is ham, sausage, bacon, roast beef, fish meat ham, fish meat sausage, whale bacon, or finely-chopped lean fish meat.

**14.** A food produced by the method according to any one of claims 1 to 13.